# EUROPÄISCHE PATENTSCHRIFT

(11) **EP 1 426 575 B1**
(45) Veröffentlichungstag und Bekanntmachung des Hinweises auf die Patenterteilung: **11.01.2006**
(21) Anmeldenummer: 03102179.3
(22) Anmeldetag: 16.07.2003
(51) Int. Cl.: F01N 11/00, F01N 3/20, F02D 41/14, G01N 33/00

(54) **Verfahren und Vorrichtung zur Überwachung eines Abgasnachbehandlungssystems**
Method and apparatus for monitoring an exhaust gas after-treatment system
Procédé et dispositif de surveillance d'un système de traitement des gaz d'échappement

(30) Priorität: 25.11.2002 DE 10254843
(43) Veröffentlichungstag der Anmeldung: 09.06.2004
(73) Patentinhaber: ROBERT BOSCH GMBH, 70442 Stuttgart (DE)
(72) Erfinder: Gerlach, Michael, 71336, Waiblingen-Neustadt (DE)

(56) Entgegenhaltungen:
- EP-A- 0 878 709
- EP-A- 1 041 254
- EP-A- 1 176 295
- US-A- 6 079 203
- US-B1- 6 367 320

## Beschreibung

### Stand der Technik

Die Erfindung betrifft ein Verfahren und eine Vorrichtung zur Überwachung eines Abgasnachbehandlungssystems.

Zur Reduzierung der Stickoxidanteile im Abgas sind Abgasnachbehandlungssysteme bekannt, bei denen dem Abgas ein Reduktionsmittel zuführbar ist. Dies kann zum einen dadurch erfolgen, dass das Reduktionsmittel oder ein Zwischenprodukt unmittelbar dem Abgas zugeführt wird bzw. dass über die üblichen Einspritzventile Reduktionsmittel in Form von Kohlenwasserstoffen zu geeigneten Zeitpunkten bzw. bei geeigneten Stellungen der Kurbel- und/oder Nockenwelle der Brennkraftmaschine zugeführt werden, die dann im Abgas als Reduktionsmittel wirken.

Üblicherweise wird vom Gesetzgeber verlangt, dass alle abgasrelevanten Komponenten, und damit auch das Abgasnachbehandlungssystem, überwacht werden. Insbesondere müssen schwerwiegende Fehler erkannt werden. Als solcher schwerwiegender Fehler gilt auch der Ausbau einer nicht elektrischen Komponente wie beispielsweise des Katalysators.

Laut US-B-6 367 320 wird die Menge an zugeführtem Reduktionsmittel verändert und ein Fehler erkannt, wenn ein Signal eines im Abgastrakt angeordneten Sensors sich nicht wie erwartet ändert. Bei einer einfachen Ausführungsform wird lediglich überprüft, ob eine Änderung der Menge an zugeführtem Reduktionsmittel eine entsprechende Änderung des Signals des Sensors zur Folge hat.

So wird Vorteile der Erfindung ein Fehler erkannt wird, wenn bei einer Erhöhung der Reduktionsmittelmenge das Signal, das den Gehalt an Reduktionsmittel und/oder den Gehalt an Abbauprodukten des Reduktionsmittels anzeigt, nicht ansteigt und/oder das Signal, das den Gehalt an Schadstoffen im Abgas anzeigt, nicht abnimmt. Ferner wird beispielsweise ein Fehler erkannt wird, wenn bei einer Verringerung der Reduktionsmittelmenge das Signal, das den Gehalt an Reduktionsmittel und/oder den Gehalt an Abbauprodukten des Reduktionsmittels anzeigt, nicht abnimmt und/oder das Signal, das den Gehalt an Schadstoffen im Abgas anzeigt, nicht zunimmt.

Hiermit können schwerwiegende Fehler in einfacher sicherer Weise erkannt werden. Ein solcher Fehler liegt beispielsweise vor, wenn der Katalysator ausgebaut oder schwerwiegend insbesondere mechanisch beschädigt wird.

Bei einer verbesserten Ausführungsform wird die Reduktionsmittelmenge um einen bestimmten Wert verändert und überprüft, ob das Signal des Sensors sich um einen erwarteten Wert ändert. Mit dieser Vorgehensweise können auch leichtere Fehler, wie beispielsweise eine fehlerhafte Qualität der Harnstoff-Wasser-Lösung, erkannt werden. So kann mittels dieser Funktion eine Qualitätssensor für das Reduktionsmittel eingespart werden.

Ein solcher Fehler wird beispielsweise erkannt wird, wenn bei einer Erhöhung der Reduktionsmittelmenge das Signal, das den Gehalt an Reduktionsmittel und/oder den Gehalt an Abbauprodukten des Reduktionsmittels anzeigt, nicht um einen erwarteten Wert ansteigt und/oder das Signal, das den Gehalt an Schadstoffen im Abgas anzeigt, nicht um einen erwarteten Wer abnimmt, oder wenn bei einer Verringerung der Reduktionsmittelmenge um einen bestimmten Wert das Signal, das den Gehalt an Reduktionsmittel und/oder den Gehalt an Abbauprodukten des Reduktionsmittels anzeigt, nicht um einen erwarteten Wert abnimmt und/oder das Signal, das den Gehalt an Schadstoffen im Abgas anzeigt, nicht um einen erwarteten Wert zunimmt.

Es kann durch diese Vorgehensweise beispielsweise erkannt werden, ob der Katalysator nicht vorhanden ist bzw. einen schwerwiegenden Mangel aufweist.

Vorteilhafte und zweckmäßige Ausgestaltungen und Weiterbildungen der Erfindung sind in den Unteransprüchen gekennzeichnet.

### Zeichnungen

Die Erfindung wird nachstehend anhand der in der Zeichnung dargestellten Ausführungsformen erläutert.

Es zeigt:
Figur 1 ein Blockdiagramm eines Abgasnachbehandlungssystems,
Figur 2 ein Flussdiagramm der erfindungsgemäßen Vorgehensweise und
Figur 3 einen Signalverlauf über der Zeit T aufgetragen.

### Beschreibung der Ausführungsbeispiele

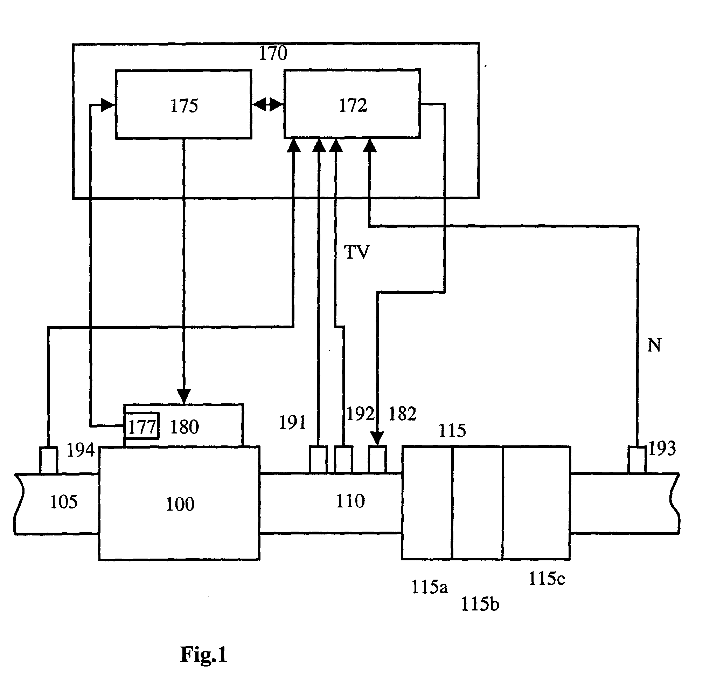

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich um einen Katalysator und/oder um einen Partikelfilter handeln. Desweiteren ist es möglich, dass mehrere Katalysatoren für unterschiedliche Schadstoffe oder Kombinationen von wenigstens einem Katalysator und einem Partikelfilter vorgesehen sind.

In der dargestellten Ausführungsform umfasst das Abgasnachbehandlungssystem 115 einen Katalysator bzw. drei Katalysatoren, in denen vorzugsweise drei Reaktionen ablaufen. In einem ersten Hydrolysekatalysator 115a wird die mit dem Stellelement 182 zugeführte Harnstoffwasserlösung in Ammoniak NH3 umgesetzt. In dem anschließenden sogenannten SCR-Katalysator 115b erfolgt die eigentliche Reaktion, in der die Stickoxide und das Ammoniak zu Stickstoff und Wasser reagieren. In dem anschließenden Oxidationskatalysator 115c wird nicht verbrauchtes Ammoniak oxidiert.

Bei alternativen Ausführungsformen, bei denen andere Reduktionsmittel eingesetzt werden, können auch andere Katalysatoren Verwendung finden.

Desweiteren ist eine Steuereinheit 170 vorgesehen, die wenigstens eine Motorsteuereinheit 175 und eine Abgasnachbehandlungssteuereinheit 172 umfasst. Die Motorsteuereinheit 175 beaufschlagt ein Kraftstoffzumesssystem 180 mit Ansteuersignalen. Die Abgasnachbehandlungssteuereinheit 172 beaufschlagt bei einer Ausgestaltung ein Stellelement 182, das in der Abgasleitung vor dem Abgasnachbehandlungssystem oder im Abgasnachbehandlungssystem angeordnet ist, mit Ansteuersignalen. Ferner tauschen die Motorsteuereinheit 175 und die Abgasnachbehandlungssteuereinheit 172 Signale aus.

Desweiteren können verschiedene Sensoren vorgesehen sein, die die Abgasnachbehandlungssteuereinheit und die Motorsteuereinheit mit Signalen versorgen. So kann wenigstens ein erster Sensor 194 vorgesehen sein, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren.

Ein Sensor 191 erfasst vorzugsweise eine Stickoxidkonzentration, die auch als zweite Größe bezeichnet wird. Ein vierter Sensor 192 erfasst vorzugsweise eine Temperaturgröße TV, die auch als Temperatur vor dem Abgasnachbehandlungssystem bezeichnet wird. Ein fünfter Sensor 193 stellt ein Signal N bereit, das das Reduktionsmittel oder aus dem Reduktionsmittel entstehende Zwischenprodukte und/oder die abzubauenden Schadstoffe unmittelbar charakterisiert. Bevorzugt werden deshalb Ammoniak-Sensoren und/oder Stickoxidsensoren verwendet.

Mit den Ausgangssignalen des ersten Sensors 194, des dritten Sensors 191, des vierten Sensors 192 und des fünften Sensors 193 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Reduktionskatalysators, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Stickoxide entstehen. Diese werden von dem Reduktionskatalysator 115b im Abgasnachbehandlungssystem 115 in Stickstoff und Wasser umgesetzt. Hierzu muß dem Abgas vor dem Abgasnachbehandlungssystem ein Reduktionsmittel zugesetzt werden. Bei der dargestellten Ausführungsform wird dieses Reduktionsmittel mittels des Stellgliedes 182 dem Abgas zugesetzt. Als Reduktionsmittel wird vorzugsweise Ammoniak verwendet, das in dem Hydrolysekatalysator 115a ausgehend von einer Harnstofflösung gebildet wird. Alternativ kann mittels des Stellelements 182 unmittelbar ein Reduktionsmittel dem Abgas zugeführt werden. Hierzu eignen sich insbesondere Kohlenwasserstoffe. Ferner kann das Reduktionsmittel durch geeignete Zumessung mittels der Stellglieder 180, die üblicherweise der Brennkraftmaschine Kraftstoff zumessen, in das Abgas eingebracht werden. Dies erfolgt vorzugsweise durch eine Nacheinspritzung, die in einem bestimmten Abstand nach der eigentlichen Einspritzung erfolgt. Diese Nacheinspritzung erfolgt so spät, dass der Kraftstoff nicht mehr verbrennt.

Das Stellelement 182 ist vorzugsweise der Abgasleitung 110 angeordnet. Es kann aber auch im oder am Abgasnachbehandlungssystem insbesondere am Hydrolysekatalysator 115a angebracht sein.

Unter der Voraussetzung, dass ansonsten keine Fehler vorliegen, insbesondere dass der Abgassensor und die Dosierung des Reduktionsmittels fehlerfrei arbeitet und dass eine ordnungsgemäße Qualität des Reduktionsmittels vorhanden ist, wird wie folgt vorgegangen:

Bei Vorliegen bestimmter Betriebszustände wird das zugeführte Reduktionsmittel für eine kurze Zeit verändert. Eine solche Veränderung des zugeführten Reduktionsmittels muss eine entsprechende Auswirkung im Abgas aufweisen. Diese Auswirkungen im Abgas werden mit geeigneten Sensoren erfasst.

Ändert sich bei an sich konstanten Bedingungen die zugeführte Reduktionsmittelmenge, muss sich ein entsprechendes Signal eines im Abgastrakt angeordneten Sensors entsprechend ändern. Als Sensoren werden bevorzugt Sensoren eingesetzt, die Signale bereitstellen, die das Reduktionsmittel oder aus dem Reduktionsmittel entstehende Zwischenprodukte und/oder die abzubauenden Schadstoffe unmittelbar erfassen. Bevorzugt werden deshalb Ammoniak-Sensoren und/oder Stickoxidsensoren verwendet. Führt eine Änderung der Reduktionsmittel nicht zu einer Änderung des entsprechenden Signals, so ist von einem schwerwiegenden Fehler auszugehen.

Vorzugsweise erfolgt die Messung in einem definierten Betriebszustand. Vorzugsweise handelt es sich hierbei um einen stationären Zustand, bei dem sich die übrigen Betriebszustände während der Prüfung nicht ändern. Bevorzugt erfolgt die Prüfung im Leerlauf.

Als Reduktionsmittel wird vorzugsweise eine Harnstoff-Wasser-Lösung eingesetzt, die unmittelbar über die Dosiervorrichtung 182 in das Abgas nach der Brennkraftmaschine eingebracht wird. Wird die Reduktionsmittelmenge erhöht, so muss der Ammoniak-Gehalt im Abgas zunehmen und sich der Stickoxidwert verringern. Wird die Harnstoffmenge reduziert, so muss der Ammoniak-Wert absinken und die Stickoxidrnenge zunehmen. In diesem Fall ist von einem fehlerfreien Abgasnachbehandlungssystem auszugehen. Wird eine oder beide Bedingungen nicht erfüllt, so ist von einem schwerwiegenden Fehler, insbesondere einem Ausbau des Katalysators auszugehen.

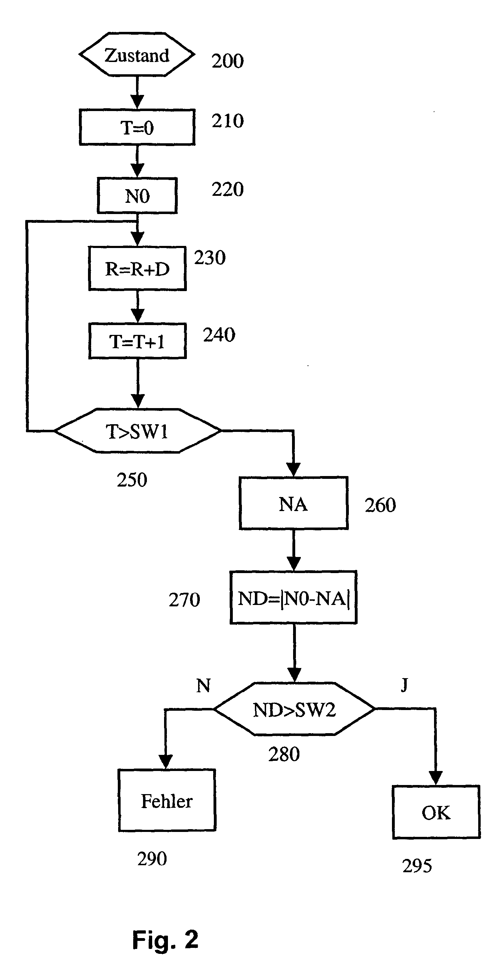

Eine bevorzugte Ausführungsform der erfindungsgemäßen Vorgehensweise ist in Figur 2 als Flussdiagramm dargestellt.

Bei dieser Ausführungsform wird lediglich überprüft, ob eine Änderung der Reduktionsmittel Menge R für eine bestimmte Zeit SW1 eine bestimmte Änderung SW2 des Sensorsignals, eines Sensors im Abgastrakt zur Folge hat. Ist dies nicht der Fall, so wird von einem Fehler ausgegangen.

In einem ersten Schritt 200 wird überprüft, ob ein Zustand vorliegt, in dem eine Überprüfung möglich ist. Insbesondere wird überprüft, ob sich die Brennkraftmaschine im Leerlaufzustand befindet. Ist dies der Fall, so wird in Schritt 210 ein Zeitzähler T auf 0 gesetzt und der aktuelle Wert N0 in Schritt 220 des Abgassensors 193 erfasst. Bevorzugt wird ein Signal N bezüglich der Stickoxidkonzentration und/oder des Ammoniak-Gehalts im Abgas ermittelt. Hierzu sind alle Sensoren geeignet, die ein Signal bereit stellen, das die Schadstoffanteile im Abgas charakterisiert und/oder das den Anteil an Reduktionsmittel und/oder Abbauprodukten des Reduktionsmittels charakterisieren.

Anschließend in Schritt 230 wird die Reduktionsmittelmenge R um einen bestimmten Wert D verändert. Dabei kann eine Erhöhung oder eine Verringerung des Reduktionsmittels vorgesehen sein. Bevorzugt ist eine Erhöhung der Reduktionsmittelmenge. Anschließend wird in Schritt 240 ein Zeitzähler um 1 erhöht. Die Abfrage 250 überprüft, ob die Zeit größer als ein Schwellwert SW1 ist. Ist dies nicht der Fall, so folgt erneut Schritt 230. Ist dies der Fall, so wird in Schritt 260 der aktuelle Wert NA des Abgassensors erfasst. Im anschließenden Schritt 270 wird der Betrag ND der Differenz des aktuellen Wertes NA und des vor der Veränderung der Reduktionsmittel vorliegenden Wert N0 bestimmt. Die Abfrage 280 überprüft, ob der Wert ND größer als ein Schwellwert SW2 ist, ist dies der Fall, so wird in Schritt 295 auf fehlerfreien Zustand und ist dies nicht der Fall, so wird in Schritt 290 auf fehlerhaften Zustand erkannt.

Bei einer verbesserten Ausführungsform wird die Reduktionsmittelmenge um eine bestimmten Wert verändert und überprüft, ob das Signal des Sensors sich um einen erwarteten Wert ändert.

Dies bedeutet beispielsweise, dass bei der in Figur 2 beschriebenen Vorgehensweise der Schwellenwert SW2 ausgehend von verschiedenen Betriebskenngrößen vorgegeben wird.

Bei einer weiteren Ausführungsform kann vorgesehen sein, dass auf einen schwerwiegenden Fehler erkannt wird, wenn sich das Signal des Sensors nicht wesentlich ändert und dass auf einen weniger schwerwiegenden Fehler erkannt wird, wenn das Signal nicht den erwarteten Wert annimmt.

Ferner kann vorgesehen sein dass auf einen schwerwiegenden Fehler erkannt wird, wenn der Betrag der Änderung kleiner als ein erster Schwellenwert ist. Auf einen leichten Fehler wird erkannt, wenn der Betrag der Änderung größer als der erste Schwellenwert aber kleiner als ein zweiter Schwellenwert ist. Dabei ist der zweite Schwellenwert größer als der erste Schwellenwert.

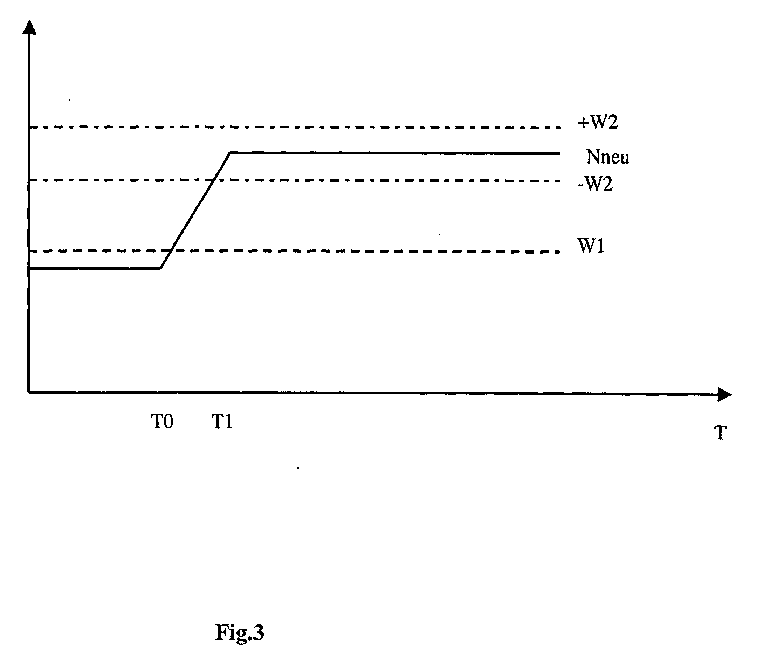

In Figur 3 ist beispielhaft das Ausgangssignal N des Sensors über der Zeit T aufgetragen. Bis zum Zeitpunkt T0 nimmt das Signal N einen konstanten Wert an. Zum Zeitpunkt T0 wird die Reduktionsmittelmenge geändert. Dies hat zur Folge, dass in dem dargestellten Beispiel im fehlerfreien Fall das Signal N auf den Wert Nneu ansteigt. Mit W1 ist der Schwellwert angegeben bei dem auf einen schwerwiegenden Fehler erkannt wird. Nimmt das Signal Werte zwischen den Werte -W2 und +W2 an so liegt kein Fehler vor. Nimmt das Signal N Werte über dem Wert W1 und unter dem Wert -W2 oder über dem Wert +W2 an, so liegt ein leichter Fehler vor.

Entsprechende Fehlerbereiche werden auch für den Fall vorgeben, wenn das Signal N bei einer Änderung der Reduktionsmittelmenge abnimmt.

Bei einer zu kleinen Änderung des Signals wird auf einen schwerwiegenden Fehler erkannt. Tritt eine Änderung des Signals N auf und entspricht diese Änderung aber nicht einem erwarteten Wert, so liegt ein leichter Fehler vor.

Vorzugsweise werden beide Fehler dem Fahrer angezeigt und/oder derart abgespeichert, dass diese im Rahmen der Diagnose bei der Wartung des Fahrzeugs auslesbar sind. Vorzugsweise wird hierbei zwischen beiden Fehlern unterschieden.

## Patentansprüche

1. Verfahren zur Überwachung eines Abgasnachbehandlungssystems (115), wobei zur Abgasnachbehandlung dem Abgas ein Reduktionsmittel zugeführt wird, bei dem die Menge an zugeführtem Reduktionsmittel verändert wird und auf Fehler erkannt wird, wenn ein Signal (N) eines im Abgastrakt (110) stromabwärts nach dem Abgasnachbehandlungssystems (115) angeordneten Sensors (193) sich nicht wie erwartet ändert, **dadurch gekennzeichnet,**
**dass** das Signal (N) den Gehalt an Reduktionsmittel oder den Gehalt an Abbauprodukten des Reduktionsmittels und den Gehalt an Schadstoffen im Abgas charakterisiert,
**dass** ein Fehler erkannt wird,
wenn bei einer Erhöhung der Reduktionsmittelmenge das Signal (N), das den Gehalt an Reduktionsmittel oder den Gehalt an Abbauprodukten des Reduktionsmittels anzeigt, nicht ansteigt sowie das Signal (N), das den Gehalt an Schadstoffen im Abgas anzeigt, nicht abnimmt oder
wenn bei einer Verringerung der Reduktionsmittelmenge das Signal (N), das den Gehalt an Reduktionsmittel oder den Gehalt an Abbauprodukten des Reduktionsmittels anzeigt, nicht abnimmt und das Signal (N), das den Gehalt an Schadstoffen im Abgas anzeigt, nicht zunimmt.

2. Verfahren nach Anspruch 1, **dadurch gekennzeichnet,**
**dass** ein Fehler erkannt wird,
wenn bei einer Erhöhung der Reduktionsmittelmenge das Signal (N), das den Gehalt an Reduktionsmittel oder den Gehalt an Abbauprodukten des Reduktionsmittels anzeigt, nicht um einen erwarteten Wert ansteigt und das Signal (N), das den Gehalt an Schadstoffen im Abgas anzeigt, nicht um einen erwarteten Wert abnimmt oder
wenn bei einer Verringerung der Reduktionsmittelmenge um einen bestimmten Wert das Signal (N), das den Gehalt an Reduktionsmittel oder den Gehalt an Abbauprodukten des Reduktionsmittels anzeigt, nicht um einen erwarteten Wert abnimmt und das Signal (N), das den Gehalt an Schadstoffen im Abgas anzeigt, nicht um einen erwarteten Wert zunimmt.

3. Verfahren nach Anspruch 1, **dadurch gekennzeichnet, dass** dem Abgas als Reduktionsmittel eine Harnstoff-Wasser-Lösung zugeführt wird.

4. Verfahren nach einem der vorhergehenden Ansprüche, **dadurch gekennzeichnet, dass** die Menge an zugeführtem Reduktionsmittel in bestimmten Betriebszuständen verändert wird.

5. Verfahren nach Anspruch 4, **dadurch gekennzeichnet, dass** die Menge an zugeführtem Reduktionsmittel in statischen Betriebszuständen und/oder im Leerlauf der Brennkraftmaschine (100) verändert wird.

6. Vorrichtung zur Überwachung eines Abgasnachbehandlungssystems (115), **dadurch gekennzeichnet, dass** ein zur Durchführung des Verfahrens nach einem der vorhergehenden Ansprüche hergerichtetes Steuergerät (172) vorgesehen ist, dass das Steuergerät (172) die Menge an zugeführten Reduktionsmittel verändert und dass das Steuergerät (172) das vom Sensor (193) bereitgestellte Signal (N) mit wenigstens einem Schwellenwert (SW2, W1, -W2, +W2) vergleicht und bei einer Schwellenüberschreitung auf Fehler erkennt.

## Revendications

1. Procédé de surveillance d'un système de post-traitement des gaz d'échappement (115) dans lequel, pour le post-traitement des gaz d'échappement, on achemine un réducteur aux gaz d'échappement, procédé selon lequel on fait varier la quantité de réducteur acheminé et on reconnaît comme défaut le fait qu'un signal (N) d'un capteur (193) disposé dans le circuit de gaz d'échappement (110) en aval du système de post-traitement des gaz d'échappement (115) ne varie pas de la façon escomptée,
**caractérisé en ce que**
le signal (N) caractérise la teneur en réducteur ou la teneur en produits de décomposition du réducteur et la teneur en polluants des gaz d'échappement, et un défaut est reconnu
- en présence d'un accroissement de la quantité moyenne de réducteur, le signal (N) qui indique la teneur en réducteur ou la teneur en produits de décomposition du réducteur ne croît pas et le signal (N) qui indique la teneur en polluants des gaz d'échappement ne décroît pas,
ou
- en présence d'une diminution de la quantité de réducteur, le signal (N) qui indique la teneur en réducteur ou la teneur en produits de décomposition du réducteur ne décroît pas et le signal (N) qui indique la teneur en polluants des gaz d'échappement ne croit pas.

2. Procédé selon la revendication 1,
**caractérisé en ce qu'**
un défaut est reconnu si
- en présence d'un accroissement de la quantité moyenne de réducteur, le signal (N) qui indique la teneur en réducteur ou la teneur en produits de décomposition du réducteur ne croît pas d'une valeur escomptée et le signal (N) qui indique la teneur en polluants des gaz d'échappement ne décroît pas d'une valeur escomptée,
ou
- en présence d'une diminution de la quantité moyenne de réducteur d'une valeur déterminée, le signal (N) qui indique la teneur en réducteur ou la teneur en produits de décomposition du réducteur ne décroît pas d'une valeur escomptée, et le signal (N) qui indique la teneur en polluants des gaz d'échappement ne croît pas d'une valeur escomptée.

3. Procédé selon la revendication 1,
**caractérisé en ce que**
comme réducteur, on achemine une solution urée-eau aux gaz d'échappement.

4. Procédé selon une des revendications précédentes,
**caractérisé en ce qu'**
on fait varier la quantité de réducteur acheminé dans certains états de fonctionnement.

5. Procédé selon la revendication 4,
**caractérisé en ce qu'**
on fait varier la quantité de réducteur acheminé dans des états de fonctionnement statiques et/ou dans la marche au ralenti du moteur à combustion interne (100).

6. Dispositif de surveillance d'un système de post-traitement des gaz d'échappement (115),
**caractérisé en ce qu'**
un appareil de commande (172) conçu pour la mise en oeuvre du procédé selon une des revendications précédentes, fait varier la quantité de réducteur acheminé et compare le signal (N) produit par le capteur (193) à au moins un seuil (SW2, W1, -W2, +W2) et reconnaît un défaut lorsqu'un seuil est dépassé.

## Claims

1. Method for monitoring an exhaust gas aftertreatment system (115), in which for the exhaust gas aftertreatment a reducing agent is fed to the exhaust gas, in which the quantity of reducing agent supplied is altered and a fault is detected if a signal (N) from a sensor (193) arranged in the exhaust section (110) downstream of the exhaust gas aftertreatment system (115) does not change in the expected way,
**characterized**
**in that** the signal (N) characterizes the content of reducing agent or the content of decomposition products of the reducing agent and the content of pollutants in the exhaust gas,
**in that** a fault is detected
if, in the event of the quantity of reducing agent being increased, the signal (N) which indicates the content of reducing agent or the content of decomposition products of the reducing agent does not rise and the signal (N) which indicates the content of pollutants in the exhaust gas does not decrease, or
if, in the event of a reduction in the quantity of reducing agent, the signal (N) which indicates the content of reducing agent or the content of decomposition products of the reducing agent does not decrease and the signal (N) which indicates the content of pollutants in the exhaust gas does not increase.

2. Method according to Claim 1, **characterized**
**in that** a fault is detected
if, in the event of the quantity of reducing agent being increased, the signal (N) which indicates the content of reducing agent or the content of decomposition products of the reducing agent does not rise by an expected value and the signal (N) which indicates the content of pollutants in the exhaust gas does not decrease by an expected value, or
if, in the event of a reduction in the quantity of reducing agent by a defined value, the signal (N) which indicates the content of reducing agent or the content of decomposition products of the reducing agent does not decrease by an expected value and the signal (N) which indicates the content of pollutants in the exhaust gas does not increase by an expected value.

3. Method according to Claim 1, **characterized in that** a urea/water solution is fed to the exhaust gas as reducing agent.

4. Method according to one of the preceding claims, **characterized in that** the quantity of reducing agent supplied is altered in defined operating states.

5. Method according to Claim 4, **characterized in that** the quantity of reducing agent supplied is altered in steady operating states and/or in idling mode of the internal combustion engine (100).

6. Apparatus for monitoring an exhaust gas aftertreatment system (115), **characterized in that** there is a control unit (172) designed to carry out the method according to one of the preceding claims, **in that** the control unit (172) alters the quantity of reducing agent supplied, and **in that** the control unit (172) compares the signal (N) provided by the sensor (193) with at least one threshold value (SW2, W1, -W2, +W2) and detects a fault if the threshold is exceeded.
